(19) Europäisches Patentamt
European Patent Office
Office européen des brevets

(11) **EP 1 628 141 B1**

(12) **EUROPÄISCHE PATENTSCHRIFT**

(45) Veröffentlichungstag und Bekanntmachung des Hinweises auf die Patenterteilung:
**18.08.2010 Patentblatt 2010/33**

(51) Int Cl.:
*G01S 17/46* *(2006.01)*       *G01S 17/93* *(2006.01)*
*G01B 11/02* *(2006.01)*

(21) Anmeldenummer: **05105353.6**

(22) Anmeldetag: **17.06.2005**

(54) **Triangulationsverfahren mit Laserdioden und einer Mono-Kamera zur Abstandsbestimmung für Stop-and-Go Anwendungen für Kraftfahrzeuge**

Method of triangulation with laser-diodes and a mono-camera for determining distance in stop-and-go applications for motor vehicles

Procède de triangulation ayant des diodes laser et une caméra pour determiner la distance pour les applications arret-demarrage des véhicules automobiles

(84) Benannte Vertragsstaaten:
**DE FR GB IT**

(30) Priorität: **17.08.2004 DE 102004039740**

(43) Veröffentlichungstag der Anmeldung:
**22.02.2006 Patentblatt 2006/08**

(73) Patentinhaber: **ROBERT BOSCH GMBH**
**70442 Stuttgart (DE)**

(72) Erfinder: **Haug, Karsten**
**70372 Stuttgart (DE)**

(56) Entgegenhaltungen:
| EP-A- 0 482 604 | EP-A- 1 068 992 |
|---|---|
| DE-A1- 4 040 758 | DE-A1- 4 110 132 |
| DE-A1- 10 055 689 | DE-A1- 19 752 145 |
| US-A- 5 587 908 | US-A- 5 691 725 |
| US-A- 6 038 496 | |

**Beschreibung**

Technisches Gebiet

Der vorliegende Anmeldungsgegenstand bezieht sich auf eine Vorrichtung zur Abstands- und/oder Objektbestimmung eines Objektes relativ zu einem Messort mit einem auf optischem Wege arbeitenden Abstandsmesssystem auf Basis aktiver Laser-Triangulation. Solche Einrichtungen werden zur Positionsbestimmung beispielsweise in sogenannten erweiterten ACC-Systemen (Adaptive Cruise Control) unter anderem für das langsame Kolonnenfahren mit geringen Abständen, insbesondere zur Erkennung von einscherenden Fahrzeugen und für Stop- and Go-Funktionen für das Bremsen bis in den Stand und das automatisierte Wieder-Anfahren aus dem Stand benötigt. Mit solchen Abstandsmess- und Objekterkennungssystemen wird eine Absicherung des Frontbereichs eines Fahrzeuges, insbesondere eines Kraftfahrzeugs erreicht.

Stand der Technik

Für die Funktionen ACC bzw. ACC-S & G (ACC = Adaptive Cruise Control, S & G Stop- and Go-Funktion) wird für das automatisierte Wieder-Anfahren eines Kraftfahrzeuges aus dem Stand und für das langsame Kolonnenfahren mit geringen Abständen eine Absicherung des Frontbereiches des Kraftfahrzeugs benötigt. Diese Absicherung kann zum einen durch den ACC-Radarsensor (Frequenz 77 GHz) oder einen Lidarsensor (Laserabstandsmessung), wie er für bekannte ACC-Systeme eingesetzt wird, alleine nur bedingt geleistet werden. Diese Sensoren realisieren mit einem horizontalen Öffnungswinkel von etwa 16° (symmetrisch zur Fahrzeuglängsachse) nur eine unzureichende Abdeckung von Seitenbereichen. Ultraschallsensoren, die aufgrund der Funktion Parkpilot ebenfalls bereits in Kraftfahrzeugen zum Einsatz gekommen sind, decken zwar eine größere Breite ab, sind aber mit einer Reichweite von ca. 2 m ebenfalls nicht ausreichend. Somit verbleibt eine Detektionslücke außerhalb des Mittenbereiches von 16° und außerhalb des unmittelbaren Nahbereiches, der bis zu 2 m vor dem Kraftfahrzeug liegt. Diese Detektionslücke ist vor allem dann kritisch, falls Fahrzeuge unmittelbar vor dem Fahrzeug einscheren.

Die Detektionslücke war bisher nur mit einer Zusatzsensorik, so zum Beispiel mit mehreren Short-Range-Radar-Sensoren auf Basis von 24 GHz zu schließen.

In Kraftfahrzeugen kommen heute zudem Mono-Videokameras für die Funktionen Night-Vision (NV) oder Lane-Departure-Warning (LDW) zum Einsatz, die einen größeren Öffnungswinkel von ca. 24° bis 50° sowie einen Messabstand von 2 m bis unendlich abdecken. Eine Mono-Videokamera ist prinzipbedingt nur in der Lage, Winkel zu messen, nicht jedoch aber Entfernungen. Eine Entfernungsmessung ist aber erforderlich, um Objekte und ihre exakte räumliche Position (3D-Position) vor dem Fahrzeug zu detektieren. Die vorhandene Mono-Kamera, welche die Primärfunktionen NV und/oder LDW darstellen, kann nicht für eine direkte Entfernungsmessung von Objekten, also nicht für eine Ortsbestimmung von Objekten eingesetzt werden. Weiterhin kommen heute vermehrt Weitwinkelkameras zur Frontüberwachung (z.B. Kreuzungsassistent im Toyota Corolla Verso Modelljahrgang 2004) und zur Parkunterstützung beim Vorwärtseinparken zum Einsatz. Auch diese Kameras können bisher nicht für eine direkte Entfernungsmessung eingesetzt werden.

Eine Entfernungsschätzung ist bisher mit Mono-Videokameras nur indirekt unter Zuhilfenahme des optischen Flusses (englisch Power Flow) möglich, wenn eine Relativbewegung zwischen eigenem Fahrzeug und Fremdobjekt stattfindet. Diese Rechenverfahren sind jedoch aufwändig, benötigen eine Relativbewegung und sind auf Objekte mit signifikanten Grauwertverläufen (z.B. Objektkanten) beschränkt.

DE 195 13 116 A1 bezieht sich auf ein Verfahren zum berührungsfreien Vermessen von Tunnelprofilen oder Straßenoberflächen nach dem Prinzip der aktiven Lasertriangulation. So wird ein berührungsfreies auf optischem Wege arbeitendes Messsystem eingesetzt. Bei dem System wird ein auf die Tunnelwand projiziertes Lichtband mittels einer Videokamera detektiert. Die Kamera ist an dem Messfahrzeug befestigt und unter definierten Winkeln auf die Tunnelwand gerichtet. Durch Auswertung der Parameter einer geometrischen Transformation von der Bildebene der Kamera auf die Schnittebene des Lichtbandes mit der Tunnelwand, wird das Tunnelprofil in einem jeden Sektor ermittelt. Aus der Gesamtgeometrie der Anordnung wird die absolute Position der Profillinie jedes Segmentes bezüglich eines fahrzeugfesten Koordinatensystems bestimmt. Die Profillinien jedes Segmentes werden mittels geeigneter Software nahtlos aneinander gefügt, woraus sich das gesamte Tunnelprofil ergibt.

WO 97/28457 A1 bezieht sich auf eine Vorrichtung zur Abstands- und/oder Positionsbestimmung. Mit Hilfe dieser Vorrichtung wird der Abstand bzw. die Position eines Objektes relativ zu einem Messort mit einer optischen Abstandsmesseinrichtung mit einer Bilderfassungseinrichtung zur Aufnahme des Objekts und einer Auswerteeinrichtung, welcher Bildsignale der Bilderfassungseinrichtung zugeführt werden und die anhand des Abstandswerts der Abstandsmesseinrichtung und der Position des Objektes in der Bildaufnahme die räumliche Position des Objekts ermittelt. Die optische Abstandsmesseinrichtung liefert den Abstand zwischen Messort und Objekt durch Anwendung einer Laufzeitmessung, wobei das mittels eines vom Messort aus aufgenommenen Bildes des Objekts die räumlichen Koordinaten in der zur Bildebene parallelen Ebene ermittelt werden. Die dritte räumliche Koordinate wird aus dem Abstandswert und den beiden anderen räumlichen Koordinaten ermittelt. Mittels der aus WO 97/28457 A1 bekannten Lösung kann eine Objektivposition für Adaptive Cruise-Control- Systeme gemäß dem Messprinzip der Laufzeitmessung bestimmt werden. Die zum Scannen erforderlichen Winkel werden über separate Videokameras bestimmt. Bei dieser Lösung handelt es sich um ein sehr teures und aufwändig zu konfigurierendes Verfahren, da neben teuren, scannenden Lidarsensoren auch noch Videokameras benötigt werden, die dazu noch mit den Lidarsensoren synchronisiert werden müssen, was einen nicht unerheblichen Aufwand bedeutet.

Die DE19752145A1 lehrt mehrere Lichtstrahlen auszusenden, die in einer Ebene parallel zueinander angeordnet sind und ein Detektor (z.B. Kamera) ermittelt die Auftreffpunkte der Lichtstrahlen, woraus eine Prozesseinheit Winkel und Entfernungen bestimmt.

Die DE4110132A1 zeigt ein Fahrzeugabstandssteuergerät, welches mittels parallel zueinander angeordneter optischer Systeme eine Triangulationsmessung durchgeführt wird, um den Abstand zu einem vorausfahrenden Objekt zu messen.

Die EP1068992A2 zeigt eine Rückfahrhilfe, die mittels einer periodischen Abtastung eines bestimmten Winkelbereichs in einer bestimmten Ebene den Abstand zu einem erfassten Objekt misst.

Die US5691725 zeigt ebenso eine Vorrichtung zur Entfernungs- und Winkelbestimmung durch Aussenden und Zurüchmessen von Elektromagnetischen Wellen mittels Abtastverfahren.

Die US5587908 zeigt ein Abstandsmesssystem, dass aus mehreren Abstandsmessungen mittels einer Filtersoftware die Abweichung des Abstandes zu einem Sollabstand bestimmt und mittels einem PID Steuerverfahren die Fahrzeuggeschwindigkeit beeinflusst.

Die DE10055689A1 zeigt einen aktiven optischen Sensor, der ein Lichtgitter erzeugt und in dieses eindringende Objekte erkennt..

Darstellung der Erfindung

Der vorgeschlagenen Lösung folgend, wird eine Mono-Kamera durch Einsatz von Laserdioden zu einem Messsystem, welches nach dem Prinzip der aktiven Lasertriangulation arbeitet, erweitert. Da eine Triangulations-Entfernungsmessung nur im Stand des Fahrzeugs, bzw. bei niedrigen Fahrzeuggeschwindigkeiten benötigt wird, wird

sie nicht gleichzeitig mit der Funktion Night-Vision (NV) eingesetzt, d.h. die Primärfunktion Night-Vision (NV) wird nicht gestört. Diese Primärfunktion ist aufgrund von Augenschutzbestimmungen bei niedrigen Fahrzeuggeschwindigkeiten nicht verfügbar, da die Infrarotscheinwerfer aus Sicherheitsgründen erst ab einer Mindestgeschwindigkeit von zum Beispiel 30 km/h eingeschaltet werden können, um eine Gefährdung von Personen durch das für Menschen unsichtbare Infrarot-Licht zu verhindern. Ähnliche Verhältnisse liegen beim Lane-Departure-Warning (LDW) vor, welches ebenfalls erst überwiegend bei Geschwindigkeiten oberhalb von 50 km/h aktiviert werden kann, da es bevorzugt für Autobahnen und gut ausgebaute Landstraßen konzipiert ist.

Bevorzugt wird eine Anzahl von Laserdioden mit Strahlformungsoptik, so zum Beispiel mindestens zwei oder vier im vorderen Stoßfänger des Fahrzeuges angebracht, womit eine Abdeckung von Randbereichen des Fahrzeugfeldes für zum Beispiel vier Messwinkel von +25°, +15°, -15° und -25° erfolgen kann. Die Laserdioden werden derart in den Stoßfänger integriert, dass die Abstrahlrichtung der Laserdioden waagerecht verläuft. Eine Strahlformungsoptik sorgt für die Erzeugung eines Strahls geringer Strahldivergenz. Die Laserdioden bilden zusammen mit der Kamera einen Triangulationssensor. Für die weitere Beschreibung sei davon ausgegangen, dass die Kamera waagerecht ausgerichtet ist und in Richtung der Fahrzeuglängsachse nach vorne schaut.

Die Strahlrichtungen der Laserdioden schneiden sich in einer Geraden lotrecht unterhalb des Hauptpunktes des Objektivs einer Mono-Kamera in einem Punkt, der im Folgenden als Fußpunkt bezeichnet wird. Auf diese Bedingung wird im Folgenden als Ausrichtebedingung referenziert. Die durch die Strahlrichtungen der Laserdioden aufgespannte Ebene wird im Folgenden als Messebene bezeichnet. Wird die Ausrichtungsbedingung erfüllt, dann verläuft der Messbereich zu jeder Laserdiode auf dem Bildsensor (Imager) der Videokamera genau in Spaltenrichtung. Bei einer Ausführung von vier Laserdioden, die in den Stoßfänger des Kraftfahrzeugs integriert werden, entstehen demnach vier Triangulations-Messbereiche in Spaltenrichtung auf dem Imager der Mono-Kamera. Befindet sich ein Objekt in einem der vier Messrichtungen innerhalb des Messbereiches, dann verschiebt sich das Abbild des an diesem Objekt gestreuten Laserlichts in Abhängigkeit von seinem Abstand in Spaltenrichtung auf dem Imager. Der Abstand des Objektes lässt sich daher aus der Position des an diesem Objekt gestreuten Laserlichts auf dem Imager nach Triangulationsbeziehungen berechnen, da der Abstand von Kamera und Laserdioden, die Strahlrichtung der Laserdioden und der Blickwinkel der Kamera bekannt sind.

Als Beleuchtungsmuster der Laserdioden kommen verschiedene Varianten in Betracht. In der einfachsten Ausführungsvariante ist das Beleuchtungsmuster eine klassische Punktoptik, wie sie bei Laserpointern Verwendung findet, wobei es sich um kollimierte, gebündelte punktförmige Messstrahlen mit niedriger Strahldivergenz handelt. Andernfalls können auch Beleuchtungsmuster, wie zum Beispiel Kreuze, Kreise, Dreiecke oder drgl. zum Einsatz kommen, die sich innerhalb einer Grauwertbilddetektion einfacher detektieren lassen.

Die Auswertestrategie erfolgt im Wesentlichen in den nachfolgend skizzierten Schritten:

Als erster Schritt erfolgt eine Triangulationsmessung, wobei Objekte innerhalb des Messbereichs des Sensors detektiert werden. Die Detektion macht sich die Eigenschaft zunutze, dass der auf das Objekt projizierte Intensitätspeak der Laserdiode sehr schmal und räumlich eng begrenzt ist und eine hohe Flankensteilheit aufweist, wie sie in natürlichen Szenen üblicherweise nicht vorkommt (vgl. hierzu auch Separation über spezielle Projektionsmuster oder Beschichtung mit optischen Filtern). Falls Objekte vorhanden sind, folgt eine Abstandsberechnung des Abstands der Objekte auf dem Wege der Triangulation. Hierzu wird die vertikale Pixelposition eines Intensitätspeaks innerhalb des jeweiligen spaltenförmigen Triangulationsmessbereiches bestimmt Ferner ist der vertikale Abstand zwischen dem Hauptpunkt des Objektivs der Videokamera und dem Fußpunkt in der Messebene bekannt. Dieser wird im Folgenden als Grundabstand bezeichnet. Aus diesen Größen ist der Abstand über die folgenden Beziehungen berechenbar, so dass die räumliche Position des Objekts (3D-Position) bestimmt werden kann. Da die Kamera näherungsweise auf unendlich fokussiert ist, befindet sich der Imager näherungsweise in der Brennebene des Objektivs. Bei anderen Konfigurationen (z.B. Frontkameras mit Tiefenschärfenbereichen im Bereich weniger cm bis einigen Metern) sind die veränderten optischen Bedingungen zu berücksichtigen.

$$(1) \quad \tan \alpha = \frac{Pixelposition}{Brennweite\ b}$$

$$(2) \quad \tan \alpha = \frac{h}{d}$$

(2) in (1) eingesetzt ergibt (3) $\quad d = \dfrac{h \cdot Brennweite\ b}{Pixelposition}$ , so dass der Abstand nunmehr bekannt ist.

Befinden sich hingegen keine Objekte innerhalb der vier von den Laserdioden ausgestrahlten Messstrahlen, dann werden auch keine Beleuchtungsmuster (Intensitätspeaks) aufgefunden.

Als weiterer, zweiter Verfahrensschritt erfolgt die Vervollständigung des Grauwertbildes an den Stellen, an denen Beleuchtungsmuster (Intensitätspeaks) gefunden werden. Dies kann vorteilhaft sein, da diese Pixel durch das Triangulationsverfahren in ihrer Intensität verändert wurden, teilweise aber für eine konventionelle Grauwertbildverarbeitung benötigt werden (z.B. für eine Primärfunktion). Die für das Grauwertbild fehlenden vier Spalten bzw. Teile davon des Triangulationssensors werden beispielsweise durch Interpolation aus Nachbarpixeln bestimmt. Alternativ kann ein weiteres Bild mit abgeschalteten Laserdioden aufgenommen werden. Schließlich ist auch denkbar, das Grauwertbild nicht zu vervollständigen, da die zu detektierenden Objekte so groß sind, dass sie trotz einiger fehlender Pixel noch einwandfrei klassifiziert werden können.

Im Rahmen eines dritten Schrittes innerhalb der Auswertestrategie, erfolgt eine Objektdetektion und eine Objektklassifikation. Die im ersten Verfahrensschritt bestimmten Objekte werden nun näher detektiert und klassifiziert, wofür klassische Methoden der Grauwertbildverarbeitung herangezogen werden. Im Umfeld (bezogen auf den Pixelkoordinaten) der Intensitätspeaks des Triangulationssensors wird nach Kanten oder anderen Objektmerkmalen im Grauwertbild gesucht und diese Objekte werden durch Segmentierung vereinigt. In einem weiteren Schritt kann dann eine Klassifikation nach bekannten Verfahren, so zum Beispiel aufgrund von Höhe und Breite des Objektes vorgenommen werden. Hierzu wird die berechnete Abstandsinformation mit berücksichtigt.

Innerhalb eines abschließenden, vierten Verfahrensschrittes, können die detektierten Objekte inklusive ihrer räumlichen Position (3D-Position) zu Objektlisten zusammengefasst und dem Steuergerät der ACC-Stop- and Go-Funktion zugeführt werden.

Durch die vorgeschlagene Lösung ist eine nur geringfügige Erweiterung um vier Laserdioden einer bereits im Fahrzeug vorhandenen Mono-Kamera erforderlich, so dass sich nur geringe Mehrkosten ergeben. Die vorgeschlagene Lösung ist somit deutlich preisgünstiger als das Installieren einer zweiten Kamera, was zu einem Stereosystem führen würde, was seinerseits einen hohen zusätzlichen Rechenaufwand verursacht. Die vorgeschlagene Lösung ist darüber hinaus preiswerter als die eingangs bereits erwähnte Zusatzsensorik in Gestalt von Short-Range-Radar-Sensoren. Außerdem können die zu überwachenden Bereiche durch die Wahl der Messwinkel genau wie bei Short-Range-Radar-Sensoren gezielt festgelegt werden und sind weitgehend unabhängig von Objekteigenschaften. Dies resultiert in einer hohen Verfügbarkeit des Triangulationssensors. Bei Stereosystemen hingegen ist nie gewährleistet, dass Objekte in bestimmten Bereichen überhaupt korrespondierende Punkte aufweisen, da zum Beispiel innerhalb homogener Flächen keine 3D-Punkte bestimmt werden können. Die Verfügbarkeit ist damit stets von signifikanten Punkten des Objekts abhängig. Analog verhält es sich beim optischen Fluss, der nicht nur signifikante Punkte voraussetzt, sondern auch von deren Relativbewegung abhängig ist.

Da auf dem Imager der Videokamera nur die vier mit den Laserdioden korrelierten Triangulationsmessbereiche in Spaltenform ausgewertet müssen, um eine räumliche Position (3D-Position) der Objekte zu berechnen, ist der Rechenaufwand deutlich geringer als bei Stereosystemen oder bei einer Berechnung des optischen Flusses.

<u>Zeichnung</u>

Anhand der Zeichnung wird die Erfindung nachstehend näher erläutert.

Es zeigt:

Figur 1 sind die im Stoßfänger eines Kraftfahrzeugs integrierten Laserdioden und deren Abstrahlwinkel zu entnehmen, die bezüglich der Fahrzeuglängsachse eingetragen sind,

Figur 2 zeigt eine Mono-Kamera samt Objektiv und Imager,

Figur 3 die geometrischen Verhältnisse, die für das Triangulationsverfahren genutzt werden,

Figur 4 die spaltenförmig ausgebildeten Triangulationsmessbereiche des Imagers,

Figur 5 den Intensitätsverlauf mit einem Intensitätspeak innerhalb einer genutzten Messspalte (vgl. Figur 4) und die

Figuren 6a, 6b und 7a, 7b Strahlengänge von Messstrahlen bei Einhaltung der Ausrichtungsbedingung bei Verletzung der Ausrichtungsbedingung

<u>Ausführungsvarianten</u>

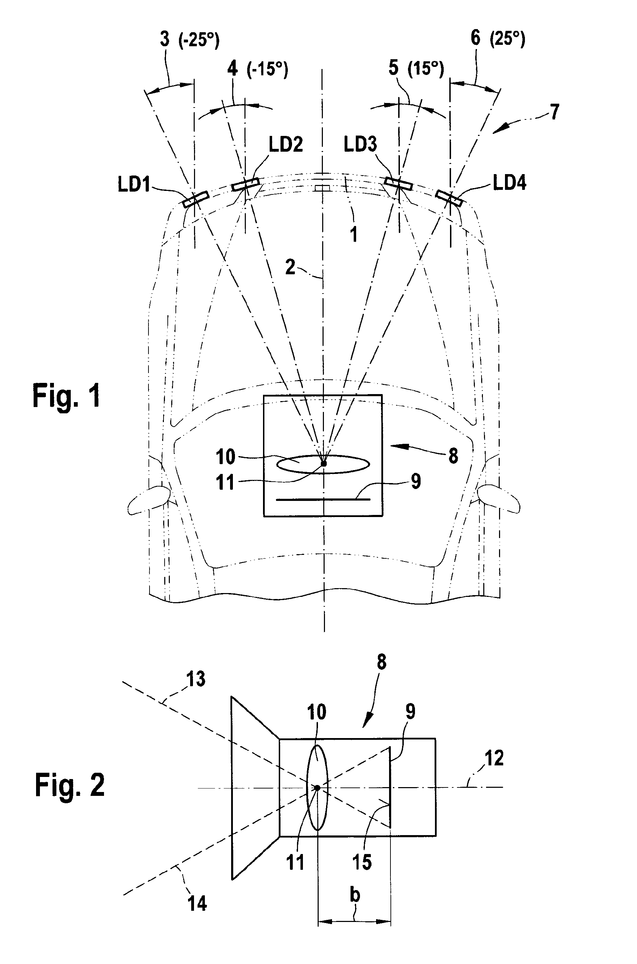

Der Darstellung gemäß Figur 1 ist in schematischer Draufsicht ein Fahrzeug zu entnehmen, in dessen Frontbereich mehrere Laserdioden integriert sind.

Der durch Bezugszeichen 7 kenntlich gemachte Fahrzeugfrontbereich wird über mehrere in einen Stoßfänger 1 eines Fahrzeugs integrierte Laserdioden LD1, LD2, LD3 und LD4 abgetastet. Bezogen auf die Fahrzeuglängsachse 2 ist die erste Laserdiode LD1 um einen Winkel von -25° zu dieser ausgerichtet, während die zweite Laserdiode LD2 um einen Winkel von -15° (vgl. Bezugszeichen 4) in Bezug auf die Fahrzeug-Längsachse 2 in den Stoßfänger 1 eines Fahrzeugs integriert ist. Die dritte Laserdiode LD3 ist in Bezug auf die Fahrzeug-Längsachse 2 um einen dritten Winkel 5, 15° entsprechend, gedreht angeordnet, während die vierte Laserdiode LD4 um einen vierten Winkel 6, im vorliegenden Falle etwa 25° versetzt in den Stoßfänger 1 des Fahrzeugs integriert ist. Die von den Laserdioden ausgehenden Laserstrahlen verlaufen in einer waagerechten Ebene (Messebene), die sich im Fahrzeugfrontbereich 7 erstreckt. Aufgrund der Abstrahlrichtungen der Laserdioden LD1, LD2, LD3 und LD4 schneiden sich die Messstrahlen in einem Punkt, nämlich dem Fußpunkt Fp.

Über die in Figur 1 dargestellten Laserdioden LD1, LD2, LD3 und LD4 wird der Fahrzeugfrontbereich 7 für die dargestellten vier Messwinkel abgetastet. Die Strahlrichtungen der in den Stoßfänger 1 integrierten Laserdioden LD1, LD2, LD3 und LD4 schneiden sich in einem Punkt Fp, dem Fußpunkt, der bei waagrechter Ausrichtung des Fahrzeugs lotrecht unterhalb des Hauptpunktes 11 des Objektivs 10 der Videokamera 8 liegt. Hinter dem Objektiv 10 der Videokamera 8 liegt der Imager (Bildsensor 9), vergleiche Figur 2.

Der Darstellung gemäß Figur 2 ist eine Mono-Kamera samt Objektiv und Imager zu entnehmen. Die in Figur 2 dargestellte Mono-Kamera 8 umfasst ein Objektiv 10, dessen Hauptpunkt mit Bezugszeichen 11 bezeichnet ist. Vom Objektiv 10 ist ein Imager 9 (Bildsensor) in einem näherungsweise der Brennweite b des Objektivs 10 entsprechenden Abstand angeordnet. Die Imager-Oberfläche ist durch Bezugszeichen 15 angedeutet. Die Achse der Mono-Kamera 8 durch Bezugszeichen 12 bezeichnet. Ein erster Messstrahl 13 und ein zweiter Messstrahl 14 verlaufen durch den Hauptpunkt 11 des Objektivs 10 und treffen an den Rändern der Imager-Oberfläche 15 des Imagers 9 auf.

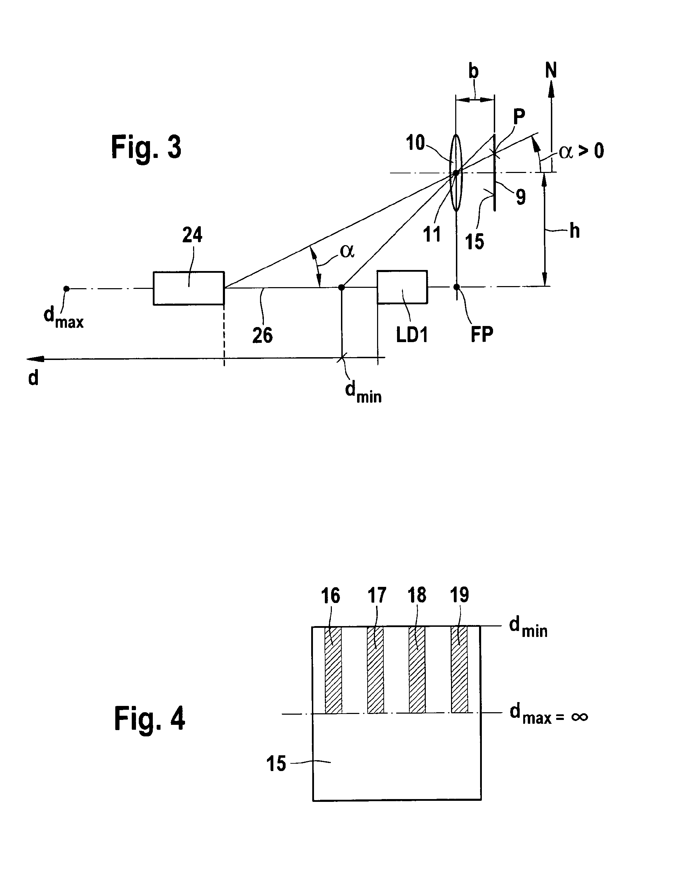

Der Darstellung gemäß Figur 3 ist in schematischer Wiedergabe das eingesetzte Triangulationsprinzip entnehmbar. Das Verfahren wird am Beispiel der ersten Laserdiode LD1 beschrieben und wird für die anderen Laserdioden analog angewandt.

Aus der Darstellung gemäß Figur 3 geht hervor, dass ein von der ersten Laserdiode LD1 emittierter Messstrahl 26 beispielsweise ein Objekt 24 erfasst, dort diffus reflektiert und als Messpunkt mit bestimmtem, detektierbarem Beleuchtungsmuster (Intensitätspeak) auf dem Imager 9 sichtbar wird. Für die Kamera 8 wird dieser Messpunkt unter

einem Winkel $\alpha$ (Triangulationswinkel) als Bildpunkt sichtbar. Ändert sich der Objektabstand d, dann verändert sich auch die Position P des Bildpunktes auf dem Imager 9. Mit Gleichung (3) ist somit direkt der Objektabstand berechenbar. Objekte sind immer dann mit dem Triangulationssensor messbar, wenn Licht nicht ausschließlich total reflektiert wird, sondern durch diffuse Reflexion in die Kamera 8 zurückgestreut wird. Dies ist für die meisten Oberflächen von Objekten gegeben (Ausnahme Außenspiegel und evtl. stark spiegelnde Scheiben).

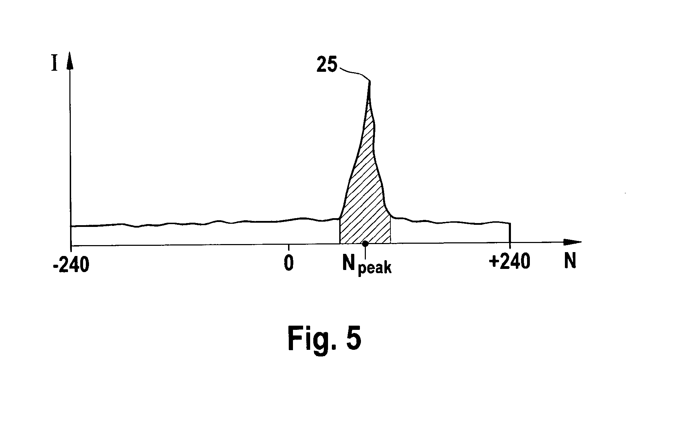

Ist der vertikale Winkel $\alpha$ über eine Pixelposition eines Intensitätspeaks (vgl. Bezugzeichen 25 in Figur 5 innerhalb eines Messbereiches 16, 17, 18 oder 19 bekannt, und der vertikale Abstand h zwischen dem Hauptpunkt 11 des Objektivs 10 und der Laserdiode LD1 bekannt, kann der Abstand d zwischen dem Objekt 24 und der Laserdiode LD1 über die in Gleichung (3) beschriebene Beziehung berechnet werden kann, so dass die räumliche Position des Objektes 24 bestimmt werden kann.

$$(1) \quad \tan \alpha = \frac{Pixelposition}{Brennweite\ b}$$

$$(2) \quad \tan \alpha = \frac{h}{d}$$

$$(3) \quad d = \frac{h \cdot Brennweite\ b}{Pixelposition}$$

Befinden sich im Fahrzeugfrontbereich 7 keine Objekte innerhalb der durch die beispielsweise vier Laserdioden LD1, LD2, LD3 und LD4 ausgestrahlten Messstrahlen, werden auch keine Beleuchtungsmuster in den betreffenden Messbereichen 16, 17, 18, 19 des Imagers 9 aufgefunden.

min *imale*

Der Messbereich wird durch die Größe des Imagers 9 und die Brennweite b gemäß den Gleichungen (4), (5) bestimmt:

$$d_{min} = \frac{h \cdot Brennweite\ b}{minimale\ Pixelposition} \quad (4)$$

$$d_{max} = \frac{h \cdot Brennweite\ b}{minimale Pixelposition} \quad (5)$$

Aus der Darstellung gemäß Figur 4 gehen Messbereiche 16, 17, 18 und 19 hervor, die spaltenförmig verlaufen, wobei jeweils ein Messbereich 16, 17, 18 bzw. 19 jeweils einer Laserdiode LD1, LD2, LD3 oder LD4 spezifisch zugeordnet ist. Da die Mono-Kamera 8 wegen der Primärfunktionen Night-Vision (NV) oder Lane-Departure-Warning (LDW) waagerecht im Fahrzeug montiert ist, wird nur die obere Hälfte der Messbereiche 16, 17, 18, 19 auf der Imageroberfläche 15 genutzt. Punkte auf der Messebene im Unendlichen, werden auf die mittlere Zeile des Imagers 9 abgebildet ($\alpha = 0°$ in Figur 3). Punkte auf der Messebene, die nicht im Unendlichen liegen, weisen $\alpha > 0°$ auf und liegen damit auf der oberen Hälfte des Imagers 9. Alle Objektpunkte, die auf die untere Hälfte des Imagers 9 abgebildet werden, liegen oberhalb der Messebene und werden daher für die Triangulationsmessung nicht benutzt.

Als Beleuchtungsmuster, die von den in die Stoßfänger 1 integrierten Laserdioden LD1, LD2, LD3 und LD4 emittiert werden, kommen verschiedene Varianten in Betracht. In der einfachsten Ausführungsvariante können durch die in den Stoßfänger 1 integrierten Laserdioden LD1, LD2, LD3 und LD4 klassische punktförmige Muster abgestrahlt werden, wobei es sich um einen kollimierten, gebündelten punktförmigen Strahl mit extrem niedriger Strahldivergenz handelt. Alternativ können andere Beleuchtungsmuster, zum Beispiel Kreuze, Kreise, Dreiecke oder dgl. zum Einsatz kommen, die innerhalb einer Grauwertbildanalyse wesentlich einfacher zu detektieren sind.

Bei Anwesenheit von Objekten 24 verändert die Triangulationsmessung die Grauwertinformation der Messbereiche 16, 17, 18 und 19. Zur Wiederherstellung des Grauwertbildes werden die vier Halbspalten der Messbereiche 16, 17, 18 und 19 daher (vgl. Darstellung gemäß Figur 4) durch Interpolation aus Nachbarpixeln bestimmt. Es wird jedoch lediglich innerhalb derjenigen Bereiche interpoliert, in denen sich Objekte 24 befunden haben, alles andere bleibt unberührt.

Alternativ zur Interpolation aus Nachbarpixeln kann ein weiteres Bild mit abgeschalteten Laserdioden LD1, LD2, LD3 und LD4 aufgenommen werden. Handelt es sich bei den detektierten Objekten 24 um relativ große Bildbereiche, braucht das Grauwertbild unter Umständen nicht vervollständigt werden, da die detektierten Objekte 24 trotz fehlender Pixel noch einwandfrei klassifiziert werden können.

Bei der eingesetzten Mono-Kamera 8 kann durch Nutzung verschiedener Wellenlängen eine Separierung zwischen normaler Grauwertbildverarbeitung für die Primärfunktionen (Lane-Departure-Warning (LDW) oder Night-Vision (NV)) und der Triangulationsmessung getrennte Wellenlängenbereiche angesprochen werden. Die Primärfunktionen LDW und NV benutzen zum Beispiel Wellenlängenbereiche zwischen 400 nm bis 950 nm, während die Lasertriangulation mittels der in den Stoßfänger 1 integrierte Laserdiode LD1, LD2, LD3 und LD4 monochromatisch über Licht mit einer Wellenlänge von 980 nm betrieben werden kann. Eine Separation erfolgt zum Beispiel über eine als Filtermaske dienende, direkt auf die Oberfläche 15 des Imagers 9 aufgebrachte Beschichtung ähnlich einem Farbfilter bei Farbkameras. Ausgehend vom in Figur 1 dargestellten Ausführungsbeispiel mit vier in den Stoßfänger 1 integrierten Laserdioden LD1, LD2, LD3 und LD4, können zum Beispiel vier Teilspalten (vgl. Messbereiche 16, 17, 18 und 19 als Halbspalten ausgebildet gemäß Figur 4) mit einem Bandpass (Durchlasswellenlänge 980 nm) versehen werden, während die restliche Pixelmatrix mit einem Tiefpass für die Primärfunktionen LDW und NV zwischen 400 nm bis 950 nm beschichtet sein kann. Eine Separierung der Primärfunktionen von der Lasertriangulationsmessung kann weiterhin durch verschiedene Polarisierung des Lichtes erfolgen. So lassen sich die spaltenförmig ausgebildeten Triangulationsbereiche 16, 17, 18 und 19 auf dem Imager 9 für die Lasertriangulation mit Polarisationsfiltern versehen, die auf die jeweilige Polarisationsebene der Laserdioden LD1, LD2, LD3 und LD4 abgestimmt sind. Dadurch kann ebenfalls eine Verbesserung der Separierung von der Hintergrundinformation erfolgen. In vorteilhafter Weise lassen sich die Laserdioden LD1, LD2, LD3 und LD4 mit den Belichtungsphasen der jeweils diesen zugeordneten, auf die Primärfunktionen LDW und NV wahrnehmenden Mono-Kamera 8 synchronisieren, um die effektive Laserleistung zu reduzieren.

Figur 5 zeigt den Intensitätsverlauf mit einem Intensitätspeaks innerhalb einer genutzten Messspalte gemäß Figur 4.

Die Position des Intensitätspeaks kann nach mehreren Verfahren, wie sie in Laserschnittsensorik für die Automatisierung von Metall-Schutzgasschweißprozessen (Karsten Haug.- Heimsheim: Jost-Jetter, 2002. - 177 S.: III., graph. Darst.; (dt.) (ISW Forschung und Praxis; 141) ISBN 3-931388-75-1 in Kap. 3.2 beschrieben sind, erfolgen.

Beispielhaft ist in Figur 5 das kombinierte Maximalwert-Schwerpunktverfahren eingezeichnet, bei dem die Peakposition $N_{peak}$ durch Schwerpunktberechnung um die Stelle maximaler Intensität bestimmt wird.

Die Objektdetektion und Objektklassifikation erfolgt nach der Abstandsberechnung mittels Triangulationssensor durch klassische Methoden der Grauwertbildverarbeitung. Hierzu wird im Umfeld des Intensitätspeaks 25 des Abbildes des projizierten Laserpunktes, bezogen auf die jeweiligen Pixelkoordinaten, der Intensitätsspeak 25 (vergleiche Figur 5) des Triangulationssensors nach Kanten oder anderen Objektmerkmalen abgesucht und diese Objektmerkmale durch Segmentierung vereinigt. Innerhalb eines weiteren, zweiten Schrittes der Objektdetektion und Objektklassifikation kann deren Klassifikation aufgrund von Höhe und Breite unter Berücksichtigung der Abstandsinformation durchgeführt werden. Anschließend werden die solcherart detektierten Objekte inklusive ihrer dreidimensionalen Position zu Objektlisten zusammengefasst und an das Adaptive Cruise Control Stop- and Go-Steuergerät oder andere Steuergeräte, die Objektinformation benötigen weitergeleitet.

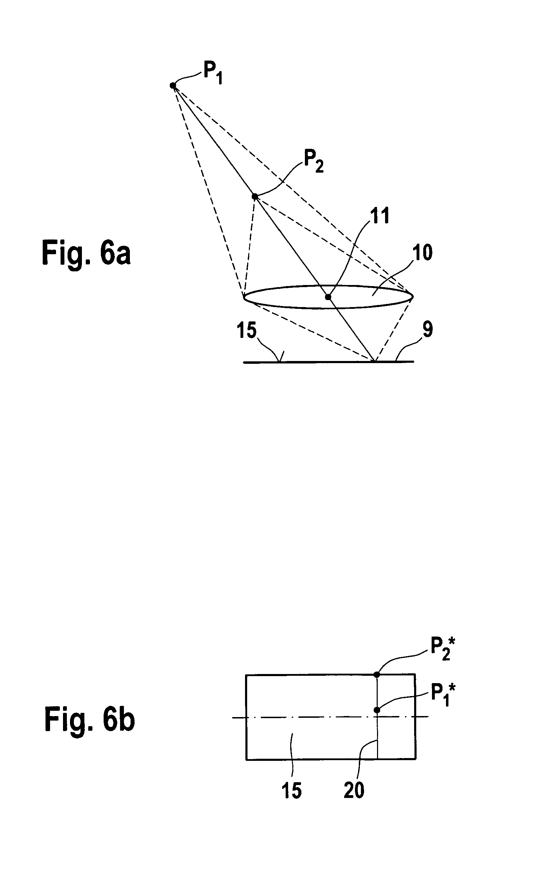

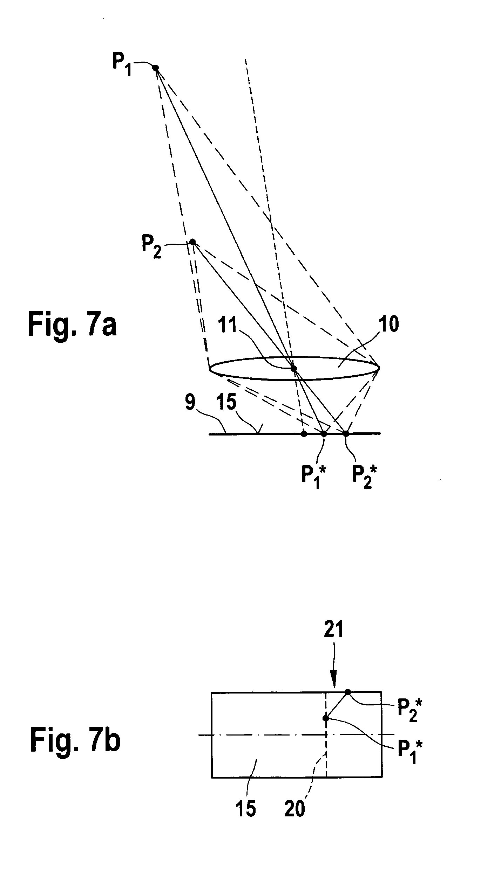

Die Figuren 6a, 6b, 7a, 7b stellen die Konsequenzen dar, die aus einer Nichteinhaltung der Ausrichtungsbedingung herrühren.

Die Darstellung gemäß Figur 6a ist nicht maßstäblich wiedergegeben, die Perspektive ist wie in Figur 1 von oben auf das Fahrzeug gerichtet. Die Ausrichtebedingung, gemäß der sich die Strahlrichtung der Laserdioden LD1, LD2, LD3 und LD4 lotrecht unterhalb des Hauptpunktes 11 des Objekts 10 im Fußpunkt Fp schneiden, ist erfüllt.

Die auf einem Messstrahl in der Messebene entfernt voneinander liegenden Objektpunkte $P_1$, $P_2$ werden auf die Bildpunkte P1* und P2* auf der Imageroberfläche 15 abgebildet. Ist die Ausrichtungsbedingung erfüllt, so liegen die Punkte $P_2$* und $P_1$* auf dem Imager 9 in Spaltenrichtung. Dies ist in Figur 6b, die eine Ansicht des Imagers 9 wiedergibt, dargestellt.

Ist die Ausrichtungsbedingung dagegen verletzt (vgl. Darstellung gemäß Figur 7a), dann verläuft die Verbindungsgerade zwischen zwei entfernt voneinander liegenden Punkten P1 und P2 des selben Messstrahls nicht mehr durch den Fußpunkt Fp. Damit liegen die Bildpunkte P1* und P2* nicht in Spaltenrichtung (vg. Figur 6a), was eine einfache und schnelle Auswertung stark erschwert, da Pixel in Spaltenrichtung direkt im Pixelstrom ausgewertet werden können.

Wird die Ausrichtungsbedingung nicht eingehalten, liegen die Messbereiche 16, 17, 18 und 19 auf der Oberfläche 15 des Imagers 9 (Bildsensor) nicht mehr in Spaltenrichtung 20, sondern verlaufen schräg. Eine einfache Auswertung in Spaltenrichtung ist damit nicht mehr möglich.

Eine Plausibilisierung der Entfernung eines im Fahrzeugfrontbereich 7 detektieren Objekts 24 mittels des vorgeschlagenen Detektionsverfahrens kann über die Breite des Intensitätspeaks 25, welcher in den Messbereichen 16, 17, 18 und 19 detektiert wird, erfolgen (vergleiche Figur 5). Aufgrund der wenn auch nur kleinen Strahldivergenz der gebündelten Laserstrahlen wird der Durchmesser eines Laserpunktes auf dem Objekt bei vergrößertem Abstand ebenfalls größer. Durch die Abbildungsverhälnisse der Kamera wiederum nimmt die Größe des Abbilds eines Objekts auf dem Imager 9 mit zunehmendem Abstand ab. Da sowohl die Strahldivergenz als auch die optische Abbildung bekannt sind, kann die Ausdehnung des Objektpeaks zur Plausibilisierung der Messung herangezogen werden. Dadurch kann eine Plausibilisierung des im Wege der im Triangulationsverfahren ermittelten 3D-Position des Objektes 24 im Fahrzeugfrontbereich 7 durchgeführt werden.

Eine Verbesserung der Empfindlichkeit des Triangulationssensors kann durch eine Einschränkung des Messbereichs herbeigeführt werden. Wie aus der Darstellung gemäß Figur 4 hervorgeht, wird bei der bisher beschriebenen Anordnung nur die obere Hälfte des Imagers 9 für die Triangulationsmessung genutzt. Weiterhin werden auch sehr weit entfernte Objekte auf Messstrahlen in der Messebene erfasst, was nicht immer erwünscht ist, da man den maximalen Messabstand teilweise definiert begrenzen möchte. Außerdem nimmt die Messempfindlichkeit mit steigender Objektentfernung ab (vgl. Gleichungen (4), (5)). Diese Nachteile können dadurch vermieden werden, dass die Messebene nicht mehr waagerecht verläuft, sondern leicht nach oben gerichtet gewählt wird. Die Ausrichtebedingung ist dabei weiterhin einzuhalten, um eine einfache Auswertung der Signale zu gewährleisten. Die Grenze der Schrägstellung der Messebene wird durch die Höhe von Objekten (so zum Beispiel Kinder oder niedrig bauende Sportwagen) definiert, die man bei maximalem Messabstand noch detektieren möchte. Hierdurch ist keine Beeinflussung der Primärfunktion gegeben. Die eingesetzten Laserdioden LD1, LD2, LD3 und LD4 werden in diesem Falle nicht waagerecht orientiert ausgerichtet, sondern leicht nach oben geneigt eingebaut.

Alternativ kann statt der Messebene auch die Kamera nach unten gekippt werden (ebenfalls unter Einhaltung der Ausrichtungsbedingung), um ihren Erfassungsbereich auf Werte kleiner unendlich zu begrenzen. Hierdurch wird allerdings die Primärfunktion beeinflusst.

Der in Figur 1 dargestellte, den Frontbereich 7 eines Kraftfahrzeugs überstreichende Messstrahlfächer kann statt durch vier diskrete Laserdioden LD1, LD2, LD3 bzw. LD4 auch mittels eines Laserfächers durch Aufweiten eines Laserstrahls mittels einer Zylinderlinse oder anderer Aufweitungsoptiken erzeugt werden. Der so entstehende, in der Literatur als Lichtschnittsensor bekannte Sensor, vgl. "Laser-Lichtschnittsensorik für die Automatisierung von Metall-Schutzgasschweißprozessen" vermisst alle Objekte in der durch den Laserfächer aufgespannten Messebene und nicht nur Objekte unter den diskreten Winkeln in der Messebene. Damit wird der komplette Fahrzeugfrontbereich 7 überstrichen. Die Laserdioden LD1, LD2, LD3 und LD4, die in der Darstellung gemäß Figur 1 als in einen Stoßfänger 1 integriert dargestellt sind, können auch über diesem oder unter diesem, relativ zur eingesetzten Mono-Kamera 8 in einer anderen Position aufgenommen sein. Entscheidend ist lediglich, dass der Grundabstand zwischen Hauptpunkt 11 und Fußpunkt $F_p$ ungleich 0 ist.

## Patentansprüche

1. Verfahren zur Detektion und zur Abstandsbestimmung von Objekten (24) im Fahrzeugfrontbereich (7) eines Kraftfahrzeuges, für eine erweiterte Adaptive-Cruise-Control-Funktion, wobei eine Mono-Kamera (8) zur Aufnahme eines Grauwertbildes verwendet wird, und der Mono-Kamera (8) im Frontbereich (7) des Fahrzeugs mindestens zwei Messstrahlen-Emitter (LD1, LD2, LD3, LD4) zur Emission optischer Messstrahlen zugeordnet sind, und die optischen Messstrahlen definierte Beleuchtungsmuster emittieren, deren diffuse Reflexionen an Objekten (24) auf einen sich in der Mono-Kamera (8) befindenden, Messbereiche (16, 17, 18, 19) aufweisenden Bildsensor (9) abgebildet werden, und so eine Triangulationsmessung durchgeführt wird, wobei die Mono-Kamera (8) auch zur Durchführung einer PrimärFunktionen zur Lane-Departure-Warning (LDW) und/oder einer Primärfunktion zur Night-Vision (NV) eingesetzt wird, **dadurch gekennzeichnet, dass** die Monokamera (8) auch eine Grauwertbildverarbeitung einer Primärfunktion zur Lane-Departure-Warning (LDW) und/oder einer Primärfunktion zur Night-Vision (NV) durchführt, wobei die durch die Triangulationsmessung veränderten Bereiche des Grauwertbildes durch Interpolation aus benachbarten Messbereichen (16,17,18, 19) rekonstruiert werden.

2. Verfahren gemäß Anspruch 1, **dadurch gekennzeichnet, dass** sich die Messstrahlrichtungen der mindestens zwei Messstrahlen-Emitter (LD1, LD2, LD3, LD4) in einem Fußpunkt (Fp) unterhalb eines Hauptpunktes (11) eines Objektivs (10) der Mono-Kamera (8) schneiden.

3. Verfahren gemäß Anspruch 1, **dadurch gekennzeichnet, dass** aus einer Pixelposition eines Intensitätspeaks (25) in einem oder mehreren der Messbereiche (16, 17, 18, 19), einem Abstand (h) zwischen einem Hauptpunkt (11) eines Objektivs (10) der Mono-Kamera (8) und einem Fußpunkt (Fp) der jeweiligen Messstrahlen-Emitter (LD1, LD2, LD3, LD4) gemäß trigonometrischer Beziehungen die räumliche Position eines Objekts (24) im Fahrzeugfrontbereich (7) bestimmt wird.

4. Verfahren gemäß Anspruch 1, **dadurch gekennzeichnet, dass** Bereiche um Intensitätspeaks (25), welche von der Triangulationsmessung (16, 17, 18, 19) herrühren, auf Kanten und/oder andere Merkmale von Objekten (24) untersucht werden, und diese Objektmerkmale (24) gegebenenfalls durch Segmentierung vereinigt werden.

5. Verfahren gemäß Anspruch 1, **dadurch gekennzeichnet, dass** eine Klassifikation der mittels des Triangulationsverfahrens detektierten Objekte (24) nach Höhe und Breite oder anderen Kriterien auf Basis einer Grauwertbildverarbeitung erfolgt.

6. Verfahren gemäß Anspruch 1, **dadurch gekennzeichnet, dass** die Messstrahlen der Messstrahlen-Emitter (LD1, LD2, LD3, LD4) in einer Ebene parallel zur Fahrbahn emittiert werden.

7. Verfahren gemäß einem oder mehrerer der vorhergehenden Patentansprüche, dass die detektierten Beleuchtungsmuster, die auf den Triangulations-Messbereichen (16, 17, 18, 19) aufgefangen werden, anhand ihrer Größe, Form und/oder ihrer Ausdehnung plausibilisiert werden.

8. Verfahren gemäß Anspruch 1, **dadurch gekennzeichnet, dass** die Messstrahlen (13, 14) der Messstrahlen-Emitter (LD1, LD2, LD3, LD4) in einer nach oben verkippten Ebene im Fahrzeugfrontbereich (7) verlaufen, derart, dass der gesamte Messbereich des Bildsensors (9) der Mono-Kamera (8) in einer Spaltenrichtung des Bildsensors (9) ausgenutzt wird, um eine Auflösung zu erhöhen.

9. Verfahren gemäß Anspruch 1, **dadurch gekennzeichnet, dass** die Blickrichtung der Mono-Kamera (8) nach unten gekippt wird.

10. Verfahren gemäß Anspruch 1, **dadurch gekennzeichnet, dass** mittels eines von den Messstrahlen-Emittern (LD1, LD2, LD3, LD4) ausgesandten Laserfächers Objekte (24) in einer im Fahrzeugfrontbereich (7) liegenden Messebene detektiert werden.

**Claims**

1. Method for detecting and for determining the distance of objects (24) in the area (7) in front of a vehicle for an extended adaptive cruise control function, a mono-camera (8) being used to take a grey-scale image, and the mono-camera (8) being assigned in the front region (7) of the vehicle at least two measuring-beam emitters (LD1, LD2, LD3, LD4) for emitting optical measuring beams, and the optical measuring beams emitting defined illumination patterns whose diffuse reflections at objects (24) are imaged on an image sensor (9) which is located in the mono-camera (8) and has measurement regions (16, 17, 18, 19) such that a triangulation measurement is carried out, the mono-camera (8) also being used to carry out a primary function for lane departure warning (LDW) and/or a primary function for night vision (NV), **characterized in that** the mono-camera (8) also carries out a grey-scale image processing of a primary function for lane departure warning (LDW) and/or a primary function for night vision (NV), the regions of the grey-scale image which are varied by the triangulation measurement being reconstructed by interpolation from neighbouring measurement regions (16, 17, 18, 19).

2. Method according to Claim 1, **characterized in that** the measuring beam directions of the at least two measuring-beam emitters (LD1, LD2, LD3, LD4) intersect at a foot point (Fp) below a main point (11) of an objective (10) of the mono-camera (8).

3. Method according to Claim 1, **characterized in that** the spatial position of an object (24) in the area (7) in front of the vehicle is determined in accordance with trigonometrical relationships from a pixel position of an intensity peak (25) in one or more of the measurement regions (16, 17, 18, 19), a distance (h) between a main point (11) of an objective (10) of the mono-camera (8), and a foot point (Fp) of the respective measuring-beam emitters (LD1, LD2, LD3, LD4).

4. Method according to Claim 1, **characterized in that** regions around intensity peaks (25) which result from the triangulation measurement (16, 17, 18, 19) are examined for edges and/or other features of objects (24), and these object features (24) are combined by segmentation, if appropriate.

5. Method according to Claim 1, **characterized in that** a classification of the objects (24) detected by means of the triangulation method is performed in terms of height and width or other criteria on the basis of grey-scale image processing.

6. Method according to Claim 1, **characterized in that** the measuring beams of the measuring-beam emitters (LD1, LD2, LD3, LD4) are emitted in a plane parallel to the roadway.

7. Method according to one or more of the preceding patent claims, **characterized in that** the detected illumination patterns which are captured on the triangulation measurement regions (16, 17, 18, 19) are checked for plausibility with the aid of their size, shape and/or their extent.

8. Method according to Claim 1, **characterized in that** the measuring beams (13, 14) of the measuring-beam emitters (LD1, LD2, LD3, LD4) run in an upwardly tilted plane in the area (7) in front of the vehicle in such a way that the total measurement region of the image sensor (9) of the mono-camera (8) is utilized in a column direction of the image sensor (9) in order to increase its resolution.

9. Method according to Claim 1, **characterized in that** the viewing direction of the mono-camera (8) is tilted downwards.

10. Method according to Claim 1, **characterized in that** objects (24) in a measurement plane lying in the area (7) in front of the vehicle are detected by means of a laser fan emitted by the measuring-beam emitters (LD1, LD2, LD3, LD4).

**Revendications**

1. Procédé de détection et de détermination de la distance d'objets (24) situés dans la zone (7) située en avant d'un véhicule automobile en vue d'une fonction élargie de contrôle adaptatif de la vitesse, dans lequel
une monocaméra (8) qui enregistre une image en valeurs de gris est utilisée,
au moins deux émetteurs (LD1, LD2, LD3, LD4) de faisceaux de mesure qui émettent dans la partie (7) située en avant du véhicule des faisceaux optiques de mesure sont associés à la monocaméra (8),
les faisceaux optiques de mesure émettent des motifs définis d'éclairage dont les réflexions diffuses sur des objets (24) forment une image sur un détecteur d'image (9) situé dans la monocaméra (8) et présentant des plages de mesure (16, 17, 18, 19) pour ainsi exécuter une mesure par triangulation,
la monocaméra (8) étant également utilisée pour exécuter une fonction primaire d'avertissement de sortie de bande de circulation ("Lane-Departure-Warming" - LDW) et/ou une fonction primaire de vision nocturne ("Night-Vision" - NV),
**caractérisé en ce que**
la monocaméra (8) exécute également un traitement des images en valeurs de gris d'une fonction primaire d'avertissement de sortie de bande de circulation (LDW) et/ou d'une fonction primaire de vision nocturne (NV)
et
**en ce que** les parties de l'image en valeurs de gris modifiées par la mesure par triangulation sont reconstruites par interpolation dans les zones de mesure (16, 17, 18, 19) voisines.

2. Procédé selon la revendication 1, **caractérisé en ce que** les directions des faisceaux de mesure des deux ou plusieurs émetteurs (LD1, LD2, LD3, LD4) de faisceaux de mesure se coupent en un point de pied (Fp) situé en dessous d'un point haut (11) d'un objectif (10) de la monocaméra (8).

3. Procédé selon la revendication 1, **caractérisé en ce que** la position spatiale d'un objet (24) situé dans la zone (7) située en avant du véhicule est déterminée par relations trigonométriques à partir de la position de pixels d'un pic d'intensité (25) d'une ou plusieurs des zones de mesure (16, 17, 18, 19), à partir de la distance (h) entre le point haut (11) de l'objectif (10) de la monocaméra (8) et le point de pied (Fp) de chaque émetteur (LD1, LD2, LD3, LD4) de faisceaux de mesure.

4. Procédé selon la revendication 1, **caractérisé en ce que** des bords et/ou d'autres caractéristiques d'objets (24) sont recherchés dans les parties qui entourent les pics d'intensité (25) provoqués par la mesure par triangulation (16, 17, 18, 19) et **en ce que** ces caractéristiques de l'objet (24) sont éventuellement rassemblées par segmentation.

5. Procédé selon la revendication 1, **caractérisé en ce que** par un traitement de l'image en valeurs de gris, il exécute une classification des objets (24) détectés au moyen de l'opération de triangulation, selon la hauteur, la largeur ou d'autres caractéristiques.

6. Procédé selon la revendication 1, **caractérisé en ce que** les faisceaux de mesure des émetteurs (LD1, LD2, LD3, LD4) de faisceaux de mesure sont émis dans un plan parallèle à la chaussée.

7. Procédé selon l'une ou plusieurs des revendications précédentes, **caractérisé en ce que** les motifs d'éclairage détectés qui sont repris sur les zones (16, 17, 18, 19) de mesure par triangulation sont plausibilisés sur base de leur taille, de leur forme et/ou de leur extension.

8. Procédé selon la revendication 1, **caractérisé en ce que** les faisceaux de mesure (13, 14) des émetteurs (LD1, LD2, LD3, LD4) de faisceaux de mesure s'étendent dans la zone (7) située en avant du véhicule selon un plan incliné vers le haut de telle sorte que la totalité de la zone de mesure du détecteur d'image (9) de la monocaméra (8) est utilisée dans la direction des colonnes du détecteur d'image (9) pour augmenter sa résolution.

9. Procédé selon la revendication 1, **caractérisé en ce que** la direction d'observation de la monocaméra (8) est inclinée vers le bas.

10. Procédé selon la revendication 1, **caractérisé en ce que** des objets (24) présents dans un plan de mesure situé dans la partie (7) située en avant du véhicule sont détectés au moyen d'un faisceau laser émis par les émetteurs (LD1, LD2, LD3, LD4) de faisceaux de mesure.

3 (-25°)    4 (-15°)    5 (15°)    6 (25°)

7

LD2    LD3

LD1    LD4

1

2

**Fig. 1**

10
11    8
9

8

13    10    9

**Fig. 2**    12

11    15
14
b

# Fig. 3

# Fig. 4

**Fig. 5**

**P₁**

**P₂**

11

10

Fig. 6a

15                                      9

**P₂***

**P₁***

Fig. 6b

15        20

P₁

P₂

**Fig. 7a**

11    10

9    15

P₁*    P₂*

21

**Fig. 7b**

P₂*

P₁*

15    20

EP 1 628 141 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19513116 A1
- WO 9728457 A1
- DE 19752145 A1
- DE 4110132 A1
- EP 1068992 A2
- US 5691725 A
- US 5587908 A
- DE 10055689 A1

**In der Beschreibung aufgeführte Nicht-Patentliteratur**

- **Karsten Haug ; Heimsheim: Jost-Jetter.** ISW Forschung und Praxis. 2002, vol. 177, III